# EUROPÄISCHE PATENTANMELDUNG

(11) **EP 4 379 208 A1**
(43) Veröffentlichungstag der Anmeldung: **05.06.2024**
(21) Anmeldenummer: 22210163.6
(22) Anmeldetag: 29.11.2022
(51) Int. Cl.: F03D 9/19, F03D 13/25, B63B 35/44

(54) **VERFAHREN ZUR BEFÖRDERUNG VON WASSERSTOFF VON EINER SCHWIMMENDEN WINDKRAFTANLAGE ZU EINEM WASSERFAHRZEUG**

(71) Anmelder: CRUSE Offshore GmbH, 20251 Hamburg (DE)
(72) Erfinder: CRUSE, Jens, 20251 Hamburg (DE)
(74) Vertreter: RGTH

(57) **Zusammenfassung**

Um mittels einer Offshore-Windkraftanlage umweltfreundlich erzeugte Energie in einfacher und sicherer Art und Weise von der Offshore-Windkraftanlage an Land zu befördern, wird ein Verfahren (100) zur Beförderung von Wasserstoff von einer schwimmenden Windkraftanlage (10) zu einem Wasserfahrzeug (11) vorgeschlagen, wobei Wasserstoff in einem Lagertank (31) einer schwimmenden Windkraftanlage (10) bereitgestellt wird, wobei ein Wasserfahrzeug (11) mit einem Transporttank (36) bei der schwimmenden Windkraftanlage (10) positioniert wird, wobei der Wasserstoff mittels einer zum Befördern des Wasserstoffs ausgebildeten Leitung (35) vom Lagertank (31) in den Transporttank (36) befördert wird.

## Beschreibung

Die vorliegende Erfindung betrifft ein Verfahren zur Beförderung von Wasserstoff von einer schwimmenden Windkraftanlage zu einem Wasserfahrzeug. Ferner betrifft die vorliegende Erfindung eine schwimmende Windkraftanlage.

### Technologischer Hintergrund

Im Stand der Technik bekannte Offshore-Windkraftanlagen werden im Verbund als Windparks im Küstenvorfeld der Meere errichtet. Zur ortsfesten Verankerung derartiger Offshore-Windkraftanlagen am Meeresgrund sind massive Gründungsstrukturen vorgesehen. Der mit Offshore-Windkraftanlagen erzeugte Strom wird mittels dazu vorgesehener Exportkabel zu einer Übergabestation an Land befördert.

Die Verankerung von Offshore-Windkraftanlagen am Meeresgrund mittels Gründungsstrukturen schränkt die geeigneten geografischen Einsatzbereiche auf die Vorküstengebiete ein. Darüber hinaus ist die Verlegung und Wartung von Exportkabeln aufwändig und kostenintensiv.

### Darstellung der Erfindung: Aufgabe, Lösung, Vorteile

Der vorliegenden Erfindung liegt die Aufgabe zugrunde, mittels einer Offshore-Windkraftanlage umweltfreundlich erzeugte Energie in einfacher und sicherer Art und Weise von der Offshore-Windkraftanlage an Land zu befördern. Ferner liegt der vorliegenden Erfindung die Aufgabe zugrunde, eine Offshore-Windkraftanlage bereitzustellen, mittels welcher Energie erzeugt werden kann, und welche zudem auch außerhalb der Küstenregionen eingesetzt werden kann.

Zur Lösung der der Erfindung zugrundeliegenden Aufgabe wird ein Verfahren zur Beförderung von Wasserstoff von einer schwimmenden Windkraftanlage zu einem Wasserfahrzeug vorgeschlagen, wobei Wasserstoff in einem Lagertank einer schwimmenden Windkraftanlage bereitgestellt wird, wobei ein Wasserfahrzeug mit einem Transporttank bei der schwimmenden Windkraftanlage positioniert wird, und wobei der Wasserstoff mittels einer zum Befördern des Wasserstoffs ausgebildeten Leitung vom Lagertank in den Transporttank befördert wird.

Bei dem erfindungsgemäßen Verfahren wird somit in einem Lagertank einer schwimmenden Windkraftanlage bereitgestellter Wasserstoff von der schwimmenden Windkraftanlage zu einem Wasserfahrzeug, beispielsweise zu einem Schiff oder einem Tanker bzw. Tankerschiff, befördert. Der Wasserstoff kann dabei in ungebundener Form oder in einer in einem Trägermedium gebundenen Form vorliegen.

Anders als im Stand der Technik wird somit der von der Windkraftanlage erzeugte elektrische Strom nicht über unterseeisch verlegte Exportkabel an eine Übergabestation an Land befördert. Vielmehr kann, wie nachstehend näher erläutert wird, der von der Windkraftanlage erzeugte elektrische Strom zur Herstellung des Wasserstoffs verwendet werden. Die in dem Verfahren vorgesehene schwimmende Windkraftanlage dient somit bevorzugt der Erzeugung von umweltfreundlichem "grünem" Wasserstoff.

Erfindungsgemäß ist bei dem vorgeschlagenen Verfahren nicht vorgesehen, dass der in dem Lagertank bereitgestellte Wasserstoff über unterseeisch verlegte Leitungen oder Pipelines an Land transportiert wird. Insbesondere sind keine unterseeisch verlegten Leitungen oder Pipelines vorhanden. Stattdessen ist erfindungsgemäß vorgesehen, dass der in einem Lagertank in der schwimmenden Windkraftanlage bereitgestellte Wasserstoff mittels einer dafür vorgesehenen Leitung in den Transporttank eines bei der schwimmenden Windkraftanlage positionierten Wasserfahrzeuges, beispielsweise eines Schiffes oder Tankers, befördert wird. Mittels des Wasserfahrzeugs, insbesondere des Schiffes oder Tankers, kann der Wasserstoff anschließend an Land transportiert werden.

Bei der im Verfahren eingesetzten Windkraftanlage handelt es sich um eine schwimmende Windkraftanlage, welche insbesondere nicht mittels bekannter massiver Gründungsstrukturen ortsfest mit dem Meeresgrund verbunden ist. Bevorzugt wird die schwimmende Windkraftanlage lediglich, wie nachstehend erläutert wird, mit Trossen oder Verankerungsseilen, Bewegungen der schwimmenden Windkraftanlage zulassend am Meeresboden verankert.

Durch die schwimmende Ausgestaltung der Windkraftanlage ergibt sich der Vorteil, dass die Windkraftanlage auf den Seegang und die vorherrschenden Windbedingungen, also insbesondere Windstärke und Windrichtung, reagieren und sich insbesondere eigenständig ausrichten kann.

Mit weiterem Vorteil kann vorgesehen sein, dass die Leitung unmittelbar oder mittelbar mit dem Lagertank und/oder dem Transporttank verbunden wird, und/oder dass die Leitung eine Schlauchleitung oder eine Rohrleitung ist.

Wenn mehrere Leitungen vorgesehen sind, so kann die zum Befördern des Wasserstoffs ausgebildete Leitung auch als erste Leitung bezeichnet werden.

Bei einer mittelbaren Verbindung mit dem Lagertank und/oder dem Transporttank können Pumpen oder Ventile beziehungsweise Rohrsysteme an Bord des Wasserfahrzeuges beziehungsweise auf der schwimmenden Windkraftanlage vorgesehen sein, um den durch die Leitung beförderten Wasserstoff in den Transporttank des Wasserfahrzeugs zu befördern. Wesentlich ist, dass mittels der Leitung in dem Lagertank der schwimmenden Windkraftanlage bereitgestellter Wasserstoff in den Transporttank des Schiffes befördert wird.

Die Leitung ist dabei insbesondere eine Schlauchleitung oder eine Rohrleitung und weiter insbesondere eine flexible Schlauchleitung oder Rohrleitung. Die Flexibilität der Schlauchleitung oder Rohrleitung ermöglicht es, Relativbewegungen zwischen dem Wasserfahrzeug und der schwimmenden Windkraftanlage bei Seegang und/oder Wind auszugleichen, ohne dass die Gefahr besteht, dass die Leitung sich von dem Wasserfahrzeug und/oder von der Windkraftanlage löst.

Ferner bevorzugt ist vorgesehen, dass der Wasserstoff molekularer Wasserstoff H₂ ist.

Besonders bevorzugt kann vorgesehen sein, dass ein mit dem Wasserstoff angereichertes flüssiges Trägermedium in dem Lagertank bereitgestellt wird, und dass das angereicherte Trägermedium umfassend den Wasserstoff mittels der Leitung vom Lagertank in den Transporttank befördert wird, wobei das flüssige Trägermedium bevorzugt ein Liquid Organic Hydrogen Carrier (LOHC) ist.

Ein mit dem Wasserstoff angereichertes flüssiges Trägermedium ist gut zu lagern und leicht zu transportieren. Ferner sind derartige Trägermedien schwer entflammbar. Zudem kann das Trägermedium wiederverwendbar sein.

Als flüssige organische Wasserstoffträger (Liquid Organic Hydrogen Carrier (LOHC)) werden organische Verbindungen bezeichnet, die Wasserstoff durch eine chemische Reaktion aufnehmen und wieder abgeben können. Zur Aufnahme von Wasserstoff reagiert eine dehydrierte, nicht mit Wasserstoff angereicherte Form des LOHCs in einer Hydrierungsreaktion mit dem Wasserstoff. Die Hydrierung ist eine exotherme Reaktion und wird bei erhöhten Drücken (ca. 30 bis 50 bar) und Temperaturen von ca. 150°C bis 200°C in Gegenwart eines Katalysators durchgeführt. Wird der Wasserstoff wieder benötigt, wird die nun hydrierte, mit Wasserstoff angereicherte Form des LOHCs dehydriert, wobei der Wasserstoff wieder aus dem LOHC freigesetzt wird. Diese Freisetzungsreaktion ist endotherm und erfolgt bei erhöhten Temperaturen (250°C bis 320°C) wieder in Gegenwart eines Katalysators. Vor der Nutzung des Wasserstoffs muss dieser gegebenenfalls noch von LOHC-Dampf gereinigt werden.

Grundsätzlich ist es auch möglich, dass der Wasserstoff gasförmig unter hohem Druck von 200 bis 700 bar oder in einem flüssigen Zustand bei sehr geringen Temperaturen von -253°C gelagert und von der schwimmenden Windkraftanlage zu dem Transporttank des Wasserfahrzeuges befördert wird. Bevorzugt ist jedoch vorgesehen, dass der Wasserstoff von dem flüssigen Trägermedium aufgenommen ist und dass dann das flüssige, mit Wasserstoff angereicherte flüssige Trägermedium in dem Lagertank der schwimmenden Windkraftanlage bereitgestellt wird.

Ferner kann bevorzugt eine zweite Leitung vorgesehen sein, wobei während der Beförderung des angereicherten Trägermediums von dem Lagertank zu dem Transporttank zeitgleich ein nicht angereichertes Trägermedium von dem Wasserfahrzeug zu einem Vorhaltungstank der schwimmenden Windkraftanlage befördert wird.

Mit anderen Worten befindet sich dann im Wasserfahrzeug ein weiterer Tank, z.B. ein Vorhaltungstank, in welchem ein dehydriertes, nicht mit Wasserstoff angereichertes Trägermedium vorgehalten wird. Über eine zweite Leitung, welche separat zur ersten Leitung vorgesehen ist, kann dann zeitgleich mit der Beförderung des angereicherten Trägermediums von dem Lagertank zu dem Transporttank, ein nicht angereichertes Trägermedium von dem Transporttank des Wasserfahrzeugs zu dem Vorhaltungstank der schwimmenden Windkraftanlage befördert werden. Der Vorhaltungstank der schwimmenden Windkraftanlage ist dabei bevorzugt ein von dem Lagertank separater Vorhaltungstank. Das auf diese Weise in dem Vorhaltungstank der schwimmenden Windkraftanlage bereitgestellte dehydrierte, nicht angereicherte flüssige Trägermedium kann auf der Windkraftanlage erneut verwendet werden, um Wasserstoff aufzunehmen und in dem Lagertank bereitzustellen.

Bevorzugt ist vorgesehen, dass die Windkraftanlage eine Vorrichtung zur Erzeugung von Wasserstoff aufweist, und/oder dass die Windkraftanlage eine Vorrichtung zur Anreicherung eines flüssigen Trägermediums mit Wasserstoff aufweist.

Bevorzugt umfasst die Vorrichtung zur Erzeugung von Wasserstoff einen Verdampfer und einen Kondensator zur Bereitstellung destillierten Wassers und/oder einen Elektrolyseur zur Wasserelektrolyse, und/oder bevorzugt umfasst die Vorrichtung zur Anreicherung eines flüssigen Trägermediums mit Wasserstoff eine Hydrisierungsvorrichtung.

Auf der schwimmenden Windkraftanlage können somit sämtliche zur Herstellung des Wasserstoffs beziehungsweise des mit dem Wasserstoff angereichten flüssigen Trägermediums benötigte Vorrichtungen bereitgestellt sein.

Bevorzugt ist vorgesehen, dass der in dem Lagertank bereitgestellte Wasserstoff mittels der Vorrichtung zur Erzeugung von Wasserstoff hergestellt wird, und/oder dass das in dem Lagertank bereitgestellte mit dem Wasserstoff angereicherte flüssige Trägermedium mittels der Vorrichtung zur Anreicherung eines flüssigen Trägermediums mit Wasserstoff hergestellt wird.

Es kann vorgesehen sein, dass der von der schwimmenden Windkraftanlage erzeugte Strom für den Betrieb des Verdampfers und Kondensators und/oder für den Betrieb des Elektrolyseurs eingesetzt wird. Bevorzugt ist jedoch, dass für den Betrieb des Verdampfers und Kondensators die Abwärme anderer Prozesse und Kühlwasser verwendet werden. Dabei ist insbesondere bevorzugt vorgesehen, dass die in der exothermen Hydrierungsreaktion des dehydrierten LOHCs mit dem Wasserstoff entstehende Wärme und/oder die im Betrieb des Elektrolyseurs erzeugte Abwärme für den Betrieb des Verdampfers eingesetzt wird. Weiter bevorzugt kann für den Betrieb des Kondensators Kühlwasser aus anderen Prozessen oder Meerwasser eingesetzt werden. Mittels des Verdampfers und des Kondensators kann Meerwasser destilliert und somit von Salzen und Mineralien befreit werden. Das destillierte Wasser kann anschließend mittels des Elektrolyseurs, welcher besonders bevorzugt durch den mit der Windkraftanlage gewonnenen Strom betrieben wird, in Wasserstoff und Sauerstoff zerlegt werden. Der so gewonnene Wasserstoff kann, wie vorstehend beschrieben, in gasförmiger oder flüssiger Form in dem Lagertank bereitgestellt werden. Bevorzugt ist jedoch vorgesehen, dass das flüssige Trägermedium mittels der Hydrierungsvorrichtung mit dem gewonnen Wasserstoff angereichert wird. Das mit dem Wasserstoff angereicherte flüssige Trägermedium wird anschließend in dem Lagertank der schwimmenden Windkraftanlage bereitgestellt.

Mit weiterem Vorteil kann vorgesehen sein, dass die, bevorzugt erste, Leitung und/oder die zweite Leitung belastungsfrei zwischen der Windkraftanlage und dem Wasserfahrzeug angeordnet wird, wobei das Wasserfahrzeug bevorzugt mittels einer Trosse und/oder einer Bugleine an der Windkraftanlage befestigt wird.

Unter einer belastungsfreien Anordnung der ersten Leitung und/oder der zweiten Leitung wird vorliegend verstanden, dass die erste Leitung und/oder die zweite Leitung keine zur Befestigung und Positionierung des Wasserfahrzeugs an der Windkraftanlage benötigten Haltekräfte aufnimmt. Belastungen der ersten Leitung und/oder der zweite Leitung sind bevorzugt lediglich durch deren Eingengewicht beziehungsweise durch das Gewicht des darin beförderten Wasserstoffs und/oder flüssigen Trägermediums gegeben. Insbesondere dienen die Leitungen nicht zur Befestigung oder Positionierung des Wasserfahrzeuges an der Windkraftanlage. Vielmehr kann vorgesehen sein, dass das Wasserfahrzeug mittels einer Trosse und/oder einer Bugleine an der Windkraftanlage befestigt wird. Die Trosse und/oder Bugleine des Wasserfahrzeuges dient dann der Befestigung und relativen Positionierung des Wasserfahrzeuges an der Windkraftanlage. Die Trosse und/oder Bugleine nimmt bevorzugt alle zum Halten und Positionieren des Wasserfahrzeugs benötigten Kräfte auf.

Die, bevorzugt flexible, erste Leitung und/oder die zweite Leitung kann durchhängend zwischen dem Wasserfahrzeug und der schwimmenden Windkraftanlage befestigt sein. Relativbewegungen zwischen Wasserfahrzeug und schwimmender Windkraftanlage können dadurch kompensiert werden.

Hierbei kann ferner vorgesehen sein, dass die erste Leitung und/oder die zweite Leitung an der Trosse und/oder der Bugleine des Wasserfahrzeuges aufgehängt ist.

Bevorzugt ist vorgesehen, dass die Windkraftanlage eine selbstausrichtende Windkraftanlage ist, wobei die Windkraftanlage bevorzugt mit mindestens einer, weiter bevorzugt mit drei, Haltetrossen und/oder Verankerungsseilen an einem Meeresboden verankert wird oder ist. Ferner kann, insbesondere bei großen Wassertiefen von bspw. 1.000 m und mehr, vorgesehen sein, dass mehrere schwimmende Windkraftanlagen miteinander mittels Haltetrossen verbunden werden. Die so verbundenen schwimmenden Windkraftanlagen bilden gewissermassen ein Netz, welches weiter bevorzugt am Rand mit dem Meeresboden verankert ist.

Mit anderen Worten ist die schwimmende Windkraftanlage derart an dem Meeresboden verankert, dass diese sich nach dem Wind und/oder dem Seegang eigenständig ausrichten kann. Hierdurch wird eine stets optimale Position oder Ausrichtung der Windkraftanlage zu der vorherrschenden Windrichtung erzielt.

Zu diesem Zweck kann vorgesehen sein, dass die Windkraftanlage eine Single-Point-Mooring-Vorrichtung, insbesondere eine Single-Point-Mooring-Boje, umfasst.

Die Single-Point-Mooring-Vorrichtung beziehungsweise die Single-Point-Mooring-Boje kann auch als Turmboje bezeichnet werden. Vorteilhafterweise ist die Single-Point-Mooring-Vorrichtung, beziehungsweise die Single-Point-Mooring-Boje, derart ausgebildet, dass sich die Windkraftanlage um diese herum, vergleichbar mit einer Wetterfahne, drehen kann.

Die Haltetrossen und/oder Verankerungsseile können bevorzugt an der Single-Point-Mooring-Vorrichtung beziehungsweise an der Single-Point-Mooring-Boje befestigt sein. Mit anderen Worten kann sich die schwimmende Windkraftanlage um die Single-Point-Mooring-Vorrichtung, beziehungsweise die Single-Point-Mooring-Boje, herum drehen, ohne dass es zu einer Verdrillung der Haltetrossen und/oder Verankerungsseile kommt.

Mit weiterem Vorteil kann vorgesehen sein, dass die Windkraftanlage einen Tragmast und einen an dem Tragmast angeordneten Rotor umfasst, wobei der Tragmast ein symmetrisches oder asymmetrisches Tragflügelprofil aufweist.

Durch die Ausgestaltung des Tragmastes mit einem symmetrischen oder asymmetrischen Tragflügelprofil wird die Selbstausrichtung der schwimmenden Windkraftanlage bevorteilt.

Der Tragmast oder eine daran angeordnete Rotorgondel kann ferner einen mit dem Rotor verbundenen Generator aufweisen.

Dabei ist bevorzugt vorgesehen, dass die Rotorgondel fest mit dem Tragmast verbunden und insbesondere nicht um den Tragmast drehbar ist.

Besonders vorteilhaft ist es, wenn es sich bei der schwimmenden Windkraftanlage um eine selbstausrichtende Windkraftanlage handelt, und wenn das Wasserfahrzeug mittels einer Trosse oder Bugleine an der schwimmenden Windkraftanlage befestigt wird.

Hierdurch ist es in besonders einfacher Weise möglich, das Wasserfahrzeug in annährend der gleichen Position stabil zu der Windkraftanlage zu halten.

In einem beispielhaften Anlegemanöver kann das Wasserfahrzeug mit dem Bug gegen die Windrichtung an die schwimmende Windkraftanlage herangefahren werden, wobei bevorzugt die Stellung des Ruderblattes und der Schub des Propellers Driftbewegungen des Wasserfahrzeugs ausgleichen können. Nach Übernahme und Befestigung einer Trosse oder Bugleine an der schwimmenden Windkraftanlage driftet das Wasserfahrzeug in Windrichtung, bis die Haltekraft der Trosse oder Bugleine diese Driftbewegung stoppt. Dadurch wird ein Zustand erreicht, der der Stabilität eines vor Anker liegenden Wasserfahrzeugs entspricht und es ist kein weiteres aktives Manövrieren erforderlich. Das Wasserfahrzeug richtet sich dann zusammen mit der schwimmenden Windkraftanlage selbsttätig zum Wind und/oder Seegang aus.

Ferner kann vorgesehen sein, dass die Windkraftranlage eine Trageinheit, insbesondere eine Schwimmereinheit, aufweist, wobei die Trageinheit Ballasteinheiten und/oder Auftriebseinheiten aufweist, wobei die Trageinheit bevorzugt als Halbtaucher ausgebildet ist.

Die Ausbildung der Trageinheit als Halbtaucher ist dabei besonders vorteilhaft. Durch die dadurch tief im Wasser liegende Trageinheit hat der Seegang nur einen geringeren Einfluss auf die Ausrichtung beziehungsweise auf die Stabilität der Windkraftanlage.

Bevorzugt ist der Tragmast umfassend den Rotor auf einer der Auftriebseinheiten angeordnet.

Mit weiterem Vorteil kann vorgesehen sein, dass die Trageinheit mindestens drei, bevorzugt vier, Auftriebseinheiten umfasst, wobei die Auftriebseinheiten in wenigstens nahezu den Ecken eines dreieckigen oder eines viereckigen, insbesondere rautenförmigen, Grundrisses angeordnet sind, wobei sich bevorzugt eine der Ballasteinheiten zwischen zwei der Auftriebseinheiten erstreckt.

Besonders bevorzugt erstreckt sich je eine der Ballasteinheiten zwischen je zwei der Auftriebseinheiten.

Nach der Beförderung oder Übergabe des Wasserstoffs beziehungsweise des mit Wasserstoff angereicherten flüssigen Trägermediums von dem Lagertank der Windkraftanlage zu dem Transporttank des Wasserfahrzeuges kann das Wasserfahrzeug zur nächsten schwimmenden Windkraftanlage fahren und nach dem gleichen Verfahren Wasserstoff beziehungsweise das angereicherte flüssige Trägermedium aufnehmen und/oder dehydriertes, nicht angereichertes flüssiges Trägermedium an die schwimmende Windkraftanlage liefern. Ist die Kapazität des oder der Transporttanks des Wasserfahrzeuges erschöpft, so kann das Wasserfahrzeug dann zu einem Hafen oder zu einem anderen Wasserfahrzeug fahren, um die Ladung zu entladen und/oder das mit Wasserstoff angereicherte flüssige Trägermedium gegen nicht angereichertes flüssiges Trägermedium auszutauschen. Danach beginnt der Zyklus von neuem.

Eine weitere Lösung der der Erfindung zugrundeliegenden Aufgabe besteht in einer schwimmenden Windkraftanlage für ein vorbeschriebenes Verfahren umfassend eine Vorrichtung zur Erzeugung von Wasserstoff und/oder umfassend eine Vorrichtung zur Anreicherung eines flüssigen Trägermediums mit Wasserstoff.

Die erfindungsgemäße Windkraftanlage kann gemäß der in dem vorbeschriebenen Verfahren verwendeten schwimmenden Windkraftanlage ausgestaltet sein.

Insbesondere kann vorgesehen sein, dass die Windkraftanlage eine selbstausrichtende Windkraftanlage ist, und/oder dass die Windkraftanlage mit mindestens einer, weiter bevorzugt mit drei, Haltetrossen und/oder Verankerungsseilen an einem Meeresboden verankerbar oder verankert ist, und/oder dass die Windkraftanlage eine Single Point Mooring-Vorrichtung, insbesondere eine Single Point Mooring Boje, umfasst, und/oder dass die Windkraftanlage einen Tragmast und einen an dem Tragmast angeordneten Rotor umfasst, wobei der Tragmast ein symmetrisches oder asymmetrisches Tragflügelprofil aufweist.

### Kurze Beschreibung der Figuren

Die Erfindung wird nachstehend näher anhand der beigefügten Figuren erläutert. Es zeigen
- Fig. 1: eine perspektivische Ansicht einer schwimmenden Windkraftanlage mit einem in der Nähe positionierten Wasserfahrzeug,
- Fig. 2: eine weitere perspektivische Ansicht einer schwimmenden Windkraftanlage mit einem in der Nähe positionierten Wasserfahrzeug,
- Fig. 3: eine Trageinheit der schwimmenden Windkraftanlage, und
- Fig. 4: ein Ablaufdiagramm eines Verfahrens zur Beförderung von Wasserstoff von einer schwimmenden Windkraftanlage zu einem Wasserfahrzeug.

### Ausführliche Beschreibung der Figuren

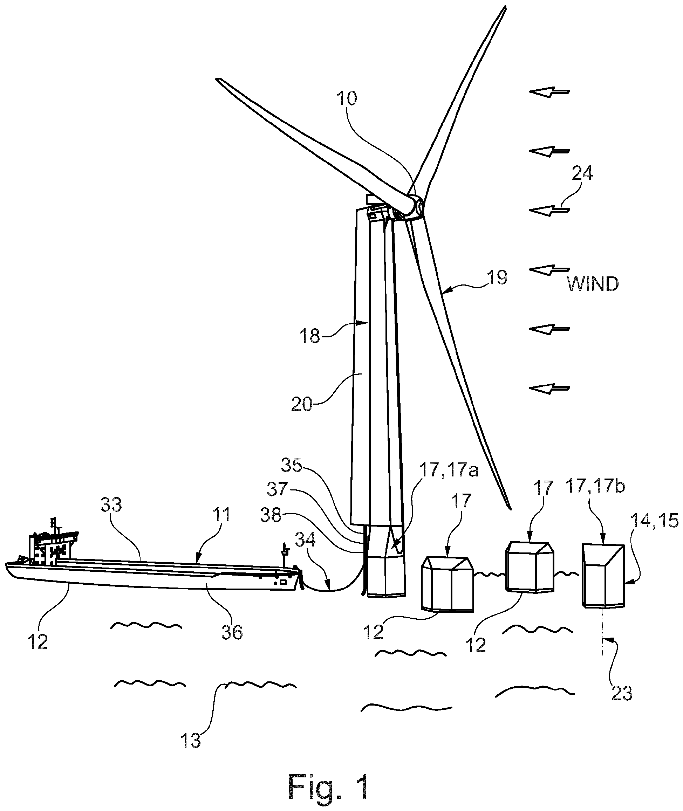

Anhand der Fig. 1 bis 4 wird ein Verfahren 100 zur Beförderung von Wasserstoff von einer schwimmenden Windkraftanlage 10 zu einem Wasserfahrzeug 11 beschrieben.

Fig. 1 zeigt eine schwimmende Windkraftanlage 10 und ein bei der schwimmenden Windkraftanlage 10 positioniertes Wasserfahrzeug 11. In Fig. 1 sind die schwimmende Windkraftanlage 10 und das Wasserfahrzeug 11 wie durch die Wasserlinien 12 an der schwimmenden Windkraftanlage 10 und am Wasserfahrzeug 11 angedeutet, im schwimmenden Zustand gezeigt, so dass sich Teile der schwimmenden Windkraftanlage 10 und des Wasserfahrzeugs 11 unterhalb der Wasseroberfläche 13 befinden .

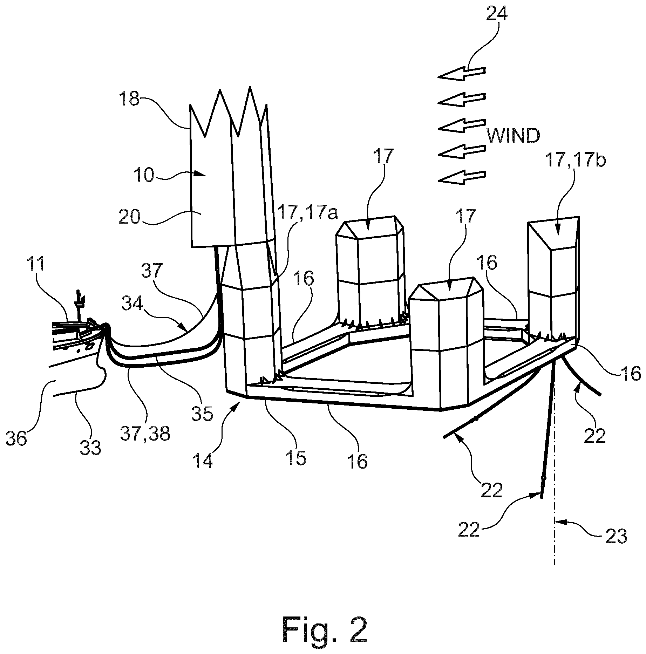

Fig. 2 zeigt aus einer anderen Perspektive die Anordnung nach Fig. 1, jedoch ohne Wasseroberfläche 13.

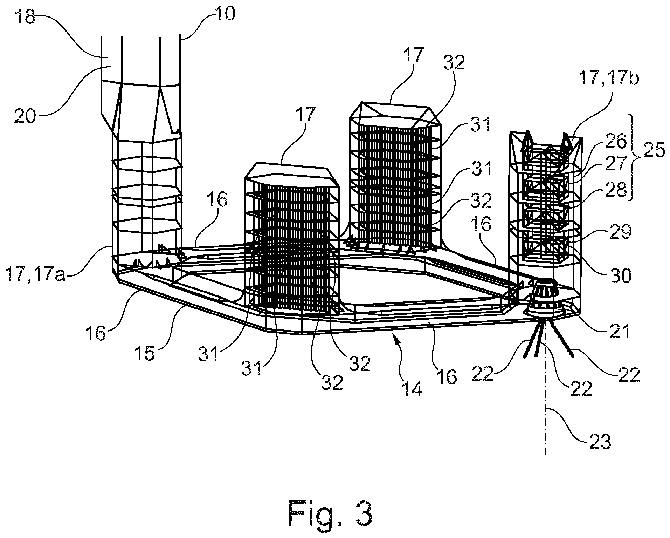

Fig. 3 zeigt eine perspektivische, schematische Ansicht einer Trageinheit 14 der schwimmenden Windkraftanlage 10. Die Trageinheit 14 der schwimmenden Windkraftanlage 10 ist als Halbtaucher 15 ausgebildet und weist Ballasteinheiten 16 und Auftriebseinheiten 17 auf. Zwischen je zwei Auftriebseinheiten 17 ist eine der Ballasteinheiten 16 angeordnet. Die vier Auftriebseinheiten 17 sind dabei an den Ecken eines viereckigen und rautenförmigen Grundrisses der Trageinheit 14 angeordnet. Wie insbesondere aus Fig. 1 ersichtlich ist, befinden sich bei der als Halbtaucher 15 ausgebildeten Trageinheit 14 bei im Wasser angeordneten Zustand die Ballasteinheiten 16 weitgehend unterhalb der Wasseroberfläche 13, wohingegen die Auftriebseinheiten 17 zumindest teilweise oberhalb der Wasseroberfläche 13 angeordnet sind. Auf einer ersten Auftriebseinheit 17a ist ein Tragmast 18 der schwimmenden Windkraftanlage 10 mit einem daran angeordneten Rotor 19 angeordnet. Der Tragmast 18 weist ein Tragflügelprofil 20 auf. In einer zweiten Auftriebseinheit 17b ist eine Single-Point-Mooring-Vorrichtung 21 angeordnet. An der Single-Point-Mooring-Vorrichtung 21 sind drei Trossen beziehungsweise Verankerungsseile 22 vorgesehen sein, mittels welcher die Trageinheit 14 beziehungsweise die schwimmende Windkraftanlage 10 am Meeresgrund verankert werden kann. Die gesamte Trageinheit 14 bzw. Windkraftanlage 10 ist frei drehbar um eine durch die Single-Point-Mooring-Vorrichtung 21 verlaufende Rotationsachse 23 drehbar. Diese freie Drehbarkeit ermöglicht eine Selbstausrichtung der schwimmenden Windkraftanlage 10 zu dem vorherrschenden Wind 24 bzw. zu der Wasserströmung. Die Selbstausrichtung wird dabei bedeutend durch das Tragflügelprofil 20 des Tragmastes 18 unterstützt.

In den Auftriebseinheiten 17 sind eine Vorrichtung zur Erzeugung von Wasserstoff 25 umfassend einen Verdampfer 26 und einen Kondensator 27 zur Herstellung destillierten Wassers und einen Elektrolyseur 28 zur Wasserelektrolyse, sowie eine Vorrichtung zur Anreicherung eines flüssigen Trägermediums mit Wasserstoff 29 umfassend eine Hydrierungsvorrichtung 30 angeordnet. Der mit der Windkraftanlage 10 gewonnene elektrische Strom wird in dem Verdampfer 26 und Kondensator 27 dazu verwendet, Meerwasser zu destillieren. Das destillierte Wasser wird dann mittels des Elektrolyseurs 28 in Wasserstoff und Sauerstoff aufgespalten, wobei zum Betrieb des Elektrolyseurs 28 ebenfalls der mit der Windkraftanlage 10 erzeugte Strom verwendet wird. In der Hydrierungsvorrichtung 30 wird der so gewonnene Wasserstoff in einer chemischen Reaktion mit einem flüssigen Trägermedium, beispielsweise LOHC, verbunden. Das so erzeugte, mit Wasserstoff angereicherte flüssige Trägermedium wird in Lagertanks 31 in den Auftriebseinheiten 17 bereitgestellt. Ferner sind Vorhaltungstanks 32 in den Auftriebseinheiten 17 vorgesehen, in welchen dehydriertes, nicht angereichertes flüssiges Trägermedium gehalten wird, um dieses in der Hydrierungsvorrichtung 30 mit dem gewonnenen Wasserstoff anzureichern.

Zur Beförderung des mit dem Wasserstoff angereicherten flüssigen Trägermediums wird, wie in den Fig. 1 und 2 gezeigt, ein Wasserfahrzeug 11, insbesondere ein Tankerschiff 33, bei der schwimmenden Windkraftanlage 10 positioniert. Das Wasserfahrzeug 11 wird mittels einer Trosse oder Bugleine 34 mit der schwimmenden Windkraftanlage 10 verbunden. Anschließend kann das Wasserfahrzeug 11 in Windrichtung abdriften, bis die Haltekraft der Bugleine 34 diese Bewegung stoppt. Es wird dann eine erste Leitung 35 zur Beförderung des mit Wasserstoff angereichertem flüssigen Trägermediums von den Lagertanks 31 der schwimmenden Windkraftanlage 10 zu einem in dem Wasserfahrzeug 11 vorgesehenen Transporttank 36 mit dem Wasserfahrzeug 11 und der schwimmenden Windkraftanlage 10 verbunden. Bei der ersten Leitung 35 handelt es sich dabei um eine flexible Schlauchleitung 37, welche im Wesentlichen belastungsfrei hängend zwischen der schwimmenden Windkraftanlage 10 und dem Wasserfahrzeug 11 verläuft. Sämtliche für das Halten des Wasserfahrzeuges 11 benötigten Kräfte werden durch die Bugleine 34 aufgefangen. Relativbewegungen zwischen dem Wasserfahrzeug 11 und der schwimmenden Windkraftanlage 10 werden durch die Flexibilität und das Durchhängen der ersten Leitung 35 ermöglicht. Nach der Verbindung des Wasserfahrzeuges 11 mit der schwimmenden Windkraftanlage 10 wird das in den Lagertanks 31 der schwimmenden Windkraftanlage 10 bereitgestellte, mit Wasserstoff angereicherte flüssige Trägermedium von den Lagertanks 31 zu dem Transporttank 36 des Wasserfahrzeuges 11 befördert. Eine zweite, ebenfalls belastungsfrei gehaltene Leitung 38 ist vorgesehen, um während der Beförderung des mit Wasserstoff angereicherten Trägermediums aus den Lagertanks 31 in den Transporttank 36 gleichzeitig ein dehydriertes, nicht angereichertes flüssiges Trägermedium aus einem nicht dargestellten Speichertank des Wasserfahrzeuges 11 in die Vorhaltungstanks 32 der schwimmenden Windkraftanlage 10 zu befördern. Das in den Vorhaltungstanks 32 somit bereitgestellte dehydrierte, nicht angereicherte flüssige Trägermedium ist dann für die erneute Anreicherung mit Wasserstoff mittels der Hydrierungsvorrichtung 30 vorgesehen. Nachdem das in den Lagertanks 31 bereitgestellte, mit Wasserstoff angereicherte flüssige Trägermedium in den Transporttank 36 des Wasserfahrzeugs 11 befördert wurde, kann das Wasserfahrzeug 11, soweit in dem Transporttank 36 noch Kapazität vorhanden ist, eine weitere, nicht dargestellte schwimmende Windkraftanlage 10 anfahren und den Vorgang, das heißt den Austausch des angereicherten flüssigen Trägermediums mit dem nicht angereicherten flüssigen Trägermedium erneut durchführen.

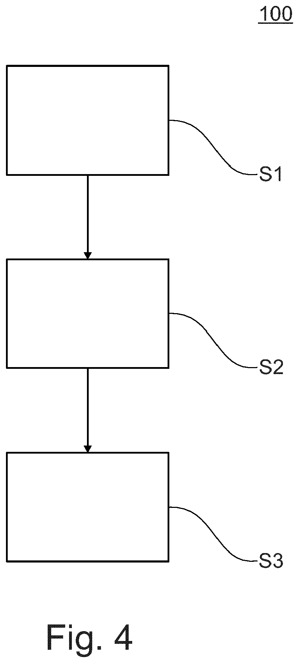

Fig. 4 zeigt ein Ablaufdiagramm eine Verfahrens 100 zur Beförderung von Wasserstoff von einer schwimmenden Windkraftanlage 10 zu einem Wasserfahrzeug 11. In einem ersten Schritt S1 wird Wasserstoff oder ein mit Wasserstoff angereichertes flüssiges Trägermedium in einem Lagertank 31 einer schwimmenden Windkraftanlage 10 bereitgestellt. In einem zweiten Verfahrensschritt S2 wird ein Wasserfahrzeug 11 mit einem Transporttank 36 bei der schwimmenden Windkraftanlage 10 positioniert. In einem dritten Verfahrensschritt S3 wird der Wasserstoff oder das mit Wasserstoff angereicherte flüssige Trägermedium mittels einer zum Befördern des Wasserstoffs ausgebildeten Leitung 35 vom Lagertank 31 in den Transporttank 36 befördert.

### Liste der Bezugszeichen

- 100: Verfahren
- 10: Schwimmende Windkraftanlage
- 11: Wasserfahrzeug
- 12: Wasserlinie
- 13: Wasseroberfläche
- 14: Trageinheit
- 15: Halbtaucher
- 16: Ballasteinheit
- 17: Auftriebseinheit
- 17a: Erste Auftriebseinheit
- 17b: Zweite Auftriebseinheit
- 18: Tragmast
- 19: Rotor
- 20: Tragflügelprofil
- 21: Single-Point-Mooring-Vorrichtung
- 22: Verankerungsseil
- 23: Rotationsachse
- 24: Wind
- 25: Vorrichtung zur Erzeugung von Wasserstoff
- 26: Verdampfer
- 27: Kondensator
- 28: Elektrolyseur
- 29: Vorrichtung zur Anreicherung eines flüssigen Trägermediums mit Wasserstoff
- 30: Hydrierungsvorrichtung
- 31: Lagertank
- 32: Vorhaltungstank
- 33: Tankerschiff
- 34: Bugleine
- 35: Leitung
- 36: Transporttank
- 37: Schlauchleitung
- 38: Leitung

- S1: Verfahrensschritt
- S2: Verfahrensschritt
- S3: Verfahrensschritt

## Patentansprüche

1. Verfahren (100) zur Beförderung von Wasserstoff von einer schwimmenden Windkraftanlage (10) zu einem Wasserfahrzeug (11), wobei Wasserstoff in einem Lagertank (31) einer schwimmenden Windkraftanlage (10) bereitgestellt wird, wobei ein Wasserfahrzeug (11) mit einem Transporttank (36) bei der schwimmenden Windkraftanlage (10) positioniert wird, wobei der Wasserstoff mittels einer zum Befördern des Wasserstoffs ausgebildeten Leitung (35) vom Lagertank (31) in den Transporttank (36) befördert wird.

2. Verfahren (100) nach Anspruch 1, wobei die Leitung (35) unmittelbar oder mittelbar mit dem Lagertank (31) und/oder dem Transporttank (36) verbunden wird, und/oder wobei die Leitung (35) eine Schlauchleitung (37) oder eine Rohrleitung ist.

3. Verfahren (100) nach Anspruch 1 oder 2, wobei ein mit dem Wasserstoff angereichertes flüssiges Trägermedium in dem Lagertank (31) bereitgestellt wird, und wobei das angereicherte Trägermedium umfassend den Wasserstoff mittels der Leitung (35) von dem Lagertank (31) in den Transporttank (36) befördert wird, wobei das flüssige Trägermedium bevorzugt ein Liquid Organic Hydrogen Carrier ist.

4. Verfahren (100) nach Anspruch 3, wobei eine zweite Leitung (38) vorgesehen ist, wobei während der Beförderung des angereicherten Trägermediums von dem Lagertank (31) zu dem Transporttank (36) zeitgleich ein nicht angereichertes Trägermedium von dem Wasserfahrzeug (11) zu einem Vorhaltungstank (32) der schwimmenden Windkraftanlage (10) befördert wird.

5. Verfahren (100) nach einem der vorgenannten Ansprüche, wobei die Windkraftanlage (10) eine Vorrichtung (25) zur Erzeugung von Wasserstoff aufweist, und/oder wobei die Windkraftanlage (10) eine Vorrichtung (29) zur Anreicherung eines flüssigen Trägermediums mit Wasserstoff aufweist.

6. Verfahren (100) nach Anspruch 5, wobei die Vorrichtung (25) zur Erzeugung von Wasserstoff einen Verdampfer (26) und einen Kondensator (27) zur Bereitstellung destillierten Wassers und/oder einen Elektrolyseur (28) zur Wasserelektrolyse umfasst, und/oder wobei die Vorrichtung (29) zur Anreicherung eines flüssigen Trägermediums mit Wasserstoff eine Hydrierungsvorrichtung (30) umfasst.

7. Verfahren (100) nach Anspruch 5 oder 6, wobei der in dem Lagertank (31) bereitgestellte Wasserstoff mittels der Vorrichtung (25) zur Erzeugung von Wasserstoff hergestellt wird, und/oder wobei das in dem Lagertank (31) bereitgestellte mit dem Wasserstoff angereicherte flüssige Trägermedium mittels der Vorrichtung (29) zur Anreicherung eines flüssigen Trägermediums mit Wasserstoff hergestellt wird.

8. Verfahren (100) nach einem der vorgenannten Ansprüche, wobei die, bevorzugt erste, Leitung (35) und/oder die zweite Leitung (38) belastungsfrei zwischen der Windkraftanlage (10) und dem Wasserfahrzeug (11) angeordnet wird, wobei das Wasserfahrzeug (11) bevorzugt mittels einer Trosse und/oder einer Bugleine (34) an der Windkraftanlage (10) befestigt wird.

9. Verfahren (100) nach einem der vorgenannten Ansprüche, wobei die Windkraftanlage (10) eine selbstausrichtende Windkraftanlage (10) ist, wobei die Windkraftanlage (10) bevorzugt mit mindestens einer, weiter bevorzugt mit drei, Haltetrossen und/oder Verankerungsseilen (22) an einem Meeresboden verankert wird oder ist, und/oder wobei die Windkraftanlage (10) eine Single Point Mooring-Vorrichtung (21), insbesondere eine Single Point Mooring Boje, umfasst.

10. Verfahren (100) nach einem der vorgenannten Ansprüche, wobei die Windkraftanlage (10) einen Tragmast (18) und einen an dem Tragmast (18) angeordneten Rotor (19) umfasst, wobei der Tragmast (18) ein symmetrisches oder asymmetrisches Tragflügelprofil (20) aufweist.

11. Verfahren (100) nach einem der vorgenannten Ansprüche, wobei die Windkraftanlage (10) eine Trageinheit (14), insbesondere eine Schwimmereinheit, aufweist, wobei die Trageinheit (14) Ballasteinheiten (16) und/oder Auftriebseinheiten (17, 17a, 17b) aufweist, wobei die Trageinheit (14) bevorzugt als Halbtaucher (15) ausgebildet ist.

12. Verfahren (100) nach Anspruch 11, wobei die Vorrichtung (25) zur Erzeugung von Wasserstoff und/oder die Vorrichtung (29) zur Anreicherung eines flüssigen Trägermediums mit Wasserstoff in mindestens einer der Ballasteinheiten (16) und/oder Auftriebseinheiten (17, 17a, 17b) angeordnet sind.

13. Verfahren (100) nach Anspruch 11 oder 12, wobei die Trageinheit (14) mindestens drei, bevorzugt vier, Auftriebseinheiten (17, 17a, 17b) umfasst, wobei die Auftriebseinheiten (17, 17a, 17b) in wenigstens nahezu den Ecken eines dreieckigen oder eines viereckigen, insbesondere rautenförmigen, Grundrisses angeordnet sind, wobei sich bevorzugt eine der Ballasteinheiten (16) zwischen zwei der Auftriebseinheiten (17, 17a, 17b) erstreckt.

14. Schwimmende Windkraftanlage (10) für ein Verfahren (100) nach einem der vorgenannten Ansprüche, umfassend eine Vorrichtung (25) zur Erzeugung von Wasserstoff und/oder umfassend eine Vorrichtung (29) zur Anreicherung eines flüssigen Trägermediums mit Wasserstoff.

15. Schwimmende Windkraftanlage (10) nach Anspruch 14, wobei die Windkraftanlage (10) eine selbstausrichtende Windkraftanlage (10) ist, und/oder wobei die Windkraftanlage (10) mit mindestens einer, weiter bevorzugt mit drei, Haltetrossen und/oder Verankerungsseilen (22) an einem Meeresboden verankerbar oder verankert ist, und/oder wobei die Windkraftanlage (10) eine Single Point Mooring-Vorrichtung (21), insbesondere eine Single Point Mooring Boje, umfasst, und/oder wobei die Windkraftanlage (10) einen Tragmast (18) und einen an dem Tragmast (18) angeordneten Rotor (19) umfasst, wobei der Tragmast (18) ein symmetrisches oder asymmetrisches Tragflügelprofil (20) aufweist.
